(19) Europäisches Patentamt

European Patent Office

Office européen des brevets

(11) **EP 1 148 031 A1**

(12) **EUROPÄISCHE PATENTANMELDUNG**

(43) Veröffentlichungstag:
24.10.2001 Patentblatt 2001/43

(51) Int Cl.⁷: **C02F 1/46**, B09C 1/00,
A62D 3/00

(21) Anmeldenummer: 00108374.0

(22) Anmeldetag: 17.04.2000

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder: **TUHH-Technologie GmbH
D-21079 Hamburg (DE)**

(72) Erfinder:
• **Stichnothe, Heinz, Dr.
20144 Hamburg (DE)**
• **Thöming, Jorg, Dr.-Ing.
90050-140 Porto Alegre RS (BR)**

(74) Vertreter: **Pohl, Manfred, Dr.
Patentanwalt
Kirchenhang 32 b
21073 Hamburg (DE)**

(54) **Elektrochemisches Verfahren zum Abbau von Organometallverbindungen in Baggergut**

(57) Die Erfindung betrifft ein Verfahren zur Behandlung von Baggergut und anderen mit Organometallverbindungen und AOX belasteten Produkten. Hierbei wird das Baggergut in einer ungeteilten Elektrolysezelle mit einem elektrochemisch aktivierten Prozeßwasser behandelt, insbesondere mit einem Prozeßwasser, das Hypochlorit enthält. Ein besonderer Vorteil des Verfahrens besteht darin, daß der pH-Wert bei der Behandlung so reguliert wird, daß eine zusätzliche Bildung von AOX verhindert und eine anschließende Verklappung möglich ist. Die Behandlung kann direkt auf einer Schute vorgenommen werden.

Fig. 2

EP 1 148 031 A1

**Beschreibung**

Die Erfindung betrifft ein elektrochemisches Verfahren zur Behandlung von Baggergut und anderen mit Organometallverbindungen und AOX belasteten Produkten sowie eine Anlage zur Durchführung des Verfahrens.

Organometallverbindungen sind in der Regel giftige Stoffe mit langer Lebensdauer. Zu diesen Stoffen zählt insbesondere Tributylzinn(IV), das umfangreich als Antifouling-Mittel in Farben für Schiffsanstriche verwendet wird. An die Verwendung solcher Antifouling-Farben sind weitreichende negative ökologische Auswirkungen geknüpft. Organozinn-Verbindungen, insbesondere das Tributylzinn, haben sich (ubiquitär) in der aquatischen Umwelt angereichert, mit drastischen Auswirkungen beispielsweise auf verschiedene Muschel- und Schneckenpopulationen. Das Problem hoher Tributylzinn-Konzentrationen tritt insbesondere in Sedimenten von Sportboothäfen, aber auch in anderen Hafenbecken auf. Deshalb bestehen besondere Anforderungen für den Umgang mit Baggergut aus solchen Hafenbecken. Um entsprechendes Baggergut problemlos verklappen zu können, ist eine Behandlung notwendig, die die Tributylzinn-Werte derart reduziert, daß keine Gefahr für die Gesundheit mehr zu erwarten ist und daß vorgeschriebene Grenzwerte eingehalten werden.

Geeignete Verfahren vor allem zur hydrometallurgischen Behandlung von giftigen Organozinnverbindungen sind derzeit nur wenig bekannt, insbesondere gibt es noch keine Verfahren, die bei vertretbaren Kosten eine Entgiftung von tributylzinnhaltigen Stoffen ermöglichen.

Aus US-PS 4,216,187 ist ein Entgiftungsverfahren für Tributylzinnacetat bekannt, das den Einsatz von Salpetersäure vorsieht. Dieses Verfahren hat jedoch den Nachteil, daß relativ niedrige pH-Werte erforderlich sind, und diese mit einem hohen, irreversiblen Säureverbrauch einhergehen.

Weiterhin ist aus US 3,719,570 ein Verfahren bekannt, bei dem suspendierte toxische Verbindungen durch elektrochemisch erzeugte Oxidantien abgebaut werden. Auch dieses Verfahren macht jedoch eine Ansäuerung der Suspension bei der Elektrolyse unvermeidlich, wodurch eine Entsorgung des gereinigten Produktes deutlich erschwert ist.

Darüber hinaus sind Produkte wie Baggergut oder dergleichen häufig mit AOX (adsorbierbare organische Halogenverbindungen) belastet, die ebenfalls ein erhebliches Gefährdungspotential darstellen. Diese Verbindungen können nur dann effektiv elektrochemisch abgebaut werden, wenn eine Ansäuerung verhindert wird.

Aufgabe der vorliegenden Erfindung ist es daher, ein solches Verfahren zur Behandlung von Baggergut und anderen mit Organometallverbindungen belasteten Produkten bereitzustellen, das effektiv und vor allem kostengünstig anwendbar ist. Mit diesem Verfahren soll der AOX-Gehalt aus den Produkten nicht erhöht und nach Möglichkeit noch verringert werden.

Erfindungsgemäß erfolgt die Lösung der gestellten Aufgabe dadurch, das das Produkt in einem durch Elektrolyse elektrochemisch aktivierbaren Prozeßwasser suspendiert und der pH-Wert über die an den Elektroden angelegte Stromdichte reguliert wird.

Der Erfindung liegt die Erkenntnis zugrunde, daß elektrochemisch aktiviertes Prozeßwasser in besonders geeigneter Weise Metall-Kohlenstoffbindungen der Organometallverbindungen aufzubrechen vermag, wobei gleichzeitig organische Verbindungen in der Feststoffmatrix des Produkts gespalten werden können. Hierdurch werden weitere Organometallverbindungen, die in der Feststoffmatrix gebunden sind, freigesetzt und entgiftet, das heißt, beispielsweise in anorganische Metallverbindungen und metallfreie Kohlenstoffverbindungen überführt. Die Dauer der Behandlung ist hierbei abhängig von der Art des mit den Organometallverbindungen belasteten Produkts sowie von der Einbindung der Organometallverbindungen in die jeweilige Feststoffphase.

Der besondere Vorteil einer derartigen Behandlung besteht darin, daß man elektrochemisch aktiviertes Prozeßwasser nach der Behandlung des Produkts erneut elektrochemisch aktivieren kann. So lassen sich verbrauchte Bestandteile des eingesetzten Prozeßwassers im Wege der elektrochemischen Aktivierung wiederherstellen, was zu einer erheblichen Kostenreduzierung bei der Anwendung dieses Verfahrens führt.

Elektrochemisch aktiviertes Prozeßwasser wird vorzugsweise mittels Elektrolyse hergestellt. Die Elektrolyse ist ein grundsätzlich bekanntes Verfahren, bei dem man die direkte Umwandlung von elektrischer Energie in chemische Energie nutzt. Hierdurch lassen sich oxidierende und reduzierende Bedingungen erzeugen, unter denen die Behandlung eines mit Organometallverbindungen belasteten Produkts möglich ist.

Insbesondere lassen sich hierdurch Tributylzinnverbindungen lösen und abbauen.

Beim Anlegen einer Spannung entstehen an der Anode oxidierende Bedingungen, die zum chemisch-oxidativen Abbau der Tributylzinnverbindungen führen. Die toxischen Tributylzinnverbindungen werden dabei zu Dibutylzinnverbindungen und weiter zu Monobutylzinnverbindungen abgebaut. Die immer noch leicht toxischen Monobutylzinnverbindungen können chemisch-oxidativ nicht weiter abgebaut werden. Der Abbau von Monobutylzinnverbindungen erfolgt erst durch Reduktion an der Kathode.

Als besonders vorteilhaft hat es sich hierbei erwiesen, wenn das Prozeßwasser Salze, insbesondere Chloride, enthält. Gelangen die Chloridionen aus diesen Salzen zur Anode, entsteht hypochlorige Säure, aus der durch Dissoziation Hypochlorit gebildet wird. Dabei ist die Menge der hypochlorigen Säure abhängig von der Konzentration des vorhandenen Chlorids. Ist die Chloridionenkonzentration im eingesetzten Prozeßwasser nicht ausreichend, läßt sich dem Prozeßwasser weiteres Chlorid zusetzen, vorzugsweise Natriumchlorid. Als Prozeßwasser ist beispielsweise Meerwasser besonders geeignet.

Am Beispiel der folgenden Gleichungen ist die chemische Oxidation von Tributylzinn zu Dibutylzinn und Monobutylzinn durch an der Anode erzeugtes Hypochlorit dargestellt.

$$2\ Bu_3Sn^+ + NaOCl + H_2O \rightarrow 2\ Bu_2Sn^{2+} + 2\ BuOH + NaCl \qquad (1)$$

$$2\ Bu_2Sn^{2+} + NaOCl + H_2O \rightarrow 2\ BuSn^{3+} + 2\ BuOH + NaCl \qquad (2)$$

Die chemische Oxidation führt zum Monobutylzinn. Dieses wird an der Kathode weiter abgebaut.

$$BuSn^{3+} + H_2O + 4\ e^- \rightarrow Sn + C_4H_{10} + OH^- \qquad (3)$$

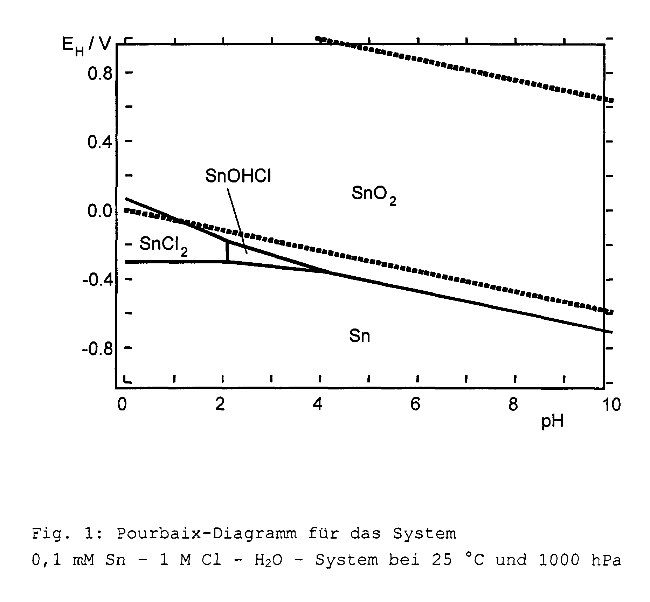

Das Ergebnis einer solchen Behandlung zeigt auch das EH-pH-Diagramm gemäß Fig. 1, das für ein wäßriges System, wie es bei der Behandlung auftritt, berechnet wurde.

Bei den geschilderten Prozessen führen beispielsweise folgende Reaktionen an der Anode zu einer Ansäuerung der Suspension aus Prozeßwasser und zu reinigendem Produkt:

$$H_2O - 2\ e^- \rightarrow \tfrac{1}{2}\ O_2 + 2\ H^+ \qquad (4)$$

$$H_2O - 2\ e^- + Cl^- \rightarrow ClO^- + 2\ H^+ \qquad (5)$$

Eine solche Ansäuerung ist aber unerwünscht, da hierdurch, insbesondere bei pH-Werten von pH 5 und darunter, die AOX-Bildung begünstigt wird. Außerdem kann das saure Produkt nicht einfach entsorgt, beispielsweise verklappt, werden. Das erfindungsgemäße Verfahren verhindert eine zu starke Ansäuerung des Produktes. Hierzu wird an die Elektroden, die sich in einer ungeteilten, also nicht in einen Anoden- und einen Kathodenraum geteilten, Elektrolysezelle befinden, eine Stromdichte so angelegt, daß eine zusätzliche Wasserreduktion an der Kathode erreicht wird, die nach folgender Gleichung zur Bildung von OH$^-$-Ionen führt:

$$2\ H_2O + 2\ e^- \rightarrow H_2 + 2\ OH^- \qquad (6)$$

Auf diese Weise wird eine Neutralisierung der an der Anode gebildeten überschüssigen Protonen herbeigeführt. Bevorzugt wird der pH-Wert über die richtige Wahl der Stromdichte so reguliert, daß er in einem Bereich von pH 6 bis pH 8 liegt. Wie das Versuchsbeipiel zeigt, bewirkt eine niedrige Stromdichte eine Zunahme der AOX-Konzentration, während eine zu hohe Stromdichte die Anodenreaktion

$$2\ Cl^- - 2\ e^- \rightarrow Cl_2 \qquad (7)$$

fördert, wodurch der pH-Wert steigt.

Die Behandlung des Produkts erfolgt während der elektrochemischen Aktivierung in der Elektrolysezelle. Das zu behandelnde Produkt wird hierzu in dem Prozeßwasser suspendiert und in die Elektrolysezelle geleitet. Gegebenenfalls, wie beispielsweise bei Baggergut aus Hafenbecken, befindet sich das Produkt bereits im Prozeßwasser, so daß dieses Baggergut unmittelbar in die Elektrolysezelle geleitet werden kann. Die Elektrolysezelle kann sich dabei beispielsweise auf einer Schute befinden.

Das erfindungsgemäße Verfahren sowie eine Anlage zur Durchführung dieses Verfahren werden nachfolgend anhand bevorzugter Ausführungsbeispiele näher erläutert.

Es zeigt

Fig. 2     ein Anlagenschema zur Behandlung von Baggergut auf einer Schute,

Fig. 3     eine schematische Darstellung des Verfahrens zur Behandlung von Baggergut in einer ungeteilten Elektrolysezelle

Fig. 4     eine schematische Darstellung des Verfahrens zur Behandlung von Baggergut in einer Kaskade aus zwei ungeteilten Elektrolysezellen

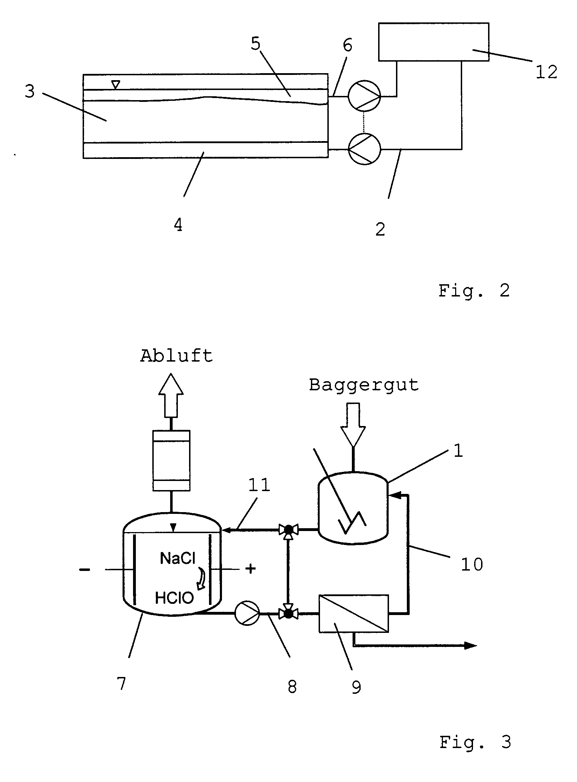

Nach einem Ausführungsbeispiel gemäß Fig. 2 besteht eine Anlage zur Durchführung des erfindungsgemäßen Verfahrens aus einer Elektrolysezelle 7 auf einer Schute. Das Prozeßwasser, beispielsweise Meerwasser, wird über eine Leitung 2 zu der Elektrolysezelle 7 geführt, in der das Prozeßwasser das Produkt 3 durchströmt. Um das mit Organometallverbindungen belastete Produkt 3, das im vorliegenden Falle mit Tributylzinn kontaminiertes Baggergut ist, zu dekontaminieren, wird das Prozeßwasser durch ein Rohrsystem 4 geleitet, das aus perforierten Rohren besteht. Dieses Rohrsystem 4 befindet sich unterhalb des Baggerguts, so daß das Prozeßwasser nach Austritt aus dem Rohrsystem 4 das Baggergut von unten nach oben durchströmt. In der Elektrolysezelle 7 wird das Prozeßwasser elektrochemisch aktiviert. Oberhalb des Baggerguts gelangt das Prozeßwasser in eine Sedimentations- bzw. Klärungszone 5, von wo aus das Prozeßwasser über eine Leitung 6 abgezogen werden kann. Das Prozeßwasser kann gegebenenfalls in einem Prozeßwasserbehälter 12 gespeichert oder direkt entsorgt werden. In Abhängigkeit von der Belastung des Prozeßwassers kann aber auch eine erneute Aktivierung erfolgen, so daß das Prozeßwasser wieder durch die Elektrolysezelle 7 geleitet wird. Der pH-Wert des mit dem Baggergut vermischten Prozeßwassers wird über die an den Elektroden angelegte Stromdichte über eine nicht näher dargestellte Regeleinrichtung (beispielsweise einen Galvanostaten) so eingestellt, daß der pH-Wert im neutralen Bereich von pH 6 bis 8 liegt. Ist die Dekontamination des Baggerguts erfolgt, kann das behandelte Baggergut verklappt und neues kontaminiertes Baggergut zur Elektrolysezelle 7 gebracht werden. Nach diesem Schema läßt sich das erfindungsgemäße Verfahren relativ einfach durchführen, so daß selbst eine Anwendung auf einem Schiff, beispielsweise einer Schute im Hafen möglich ist. Vor allem läßt sich auf diese Weise ein verklappungsfähiges Produkt erzeugen, bei dem die Konzentration an toxischen Organometallverbindungen, insbesondere Tributylzinn, drastisch gesenkt ist.

Ein weiteres Ausführungsbeispiel ist in Fig. 3 dargestellt. In einer Elektrolysezelle 7 wird elektrochemisch aktiviertes Prozeßwasser erzeugt. Im vorliegenden Falle gelangt chloridhaltiges Meerwasser zusammen mit Baggergut in die Elektrolysezelle 7, wo an einer dimensionsstabilen Anode hypochlorige Säure gebildet wird. Das solchermaßen aktivierte Prozeßwasser ist in der Lage, die Zinn-Kohlenstoff-Bindungen der Tributylzinnverbindungen im Baggergut oxidativ aufzubrechen und auch, so in der Feststoffmatrix vorhanden, die Bindungen organischer Substanz, beispielsweise von AOX. Auf diese Weise lassen sich in solcher Matrix gebundene Tributylzinnverbindungen freisetzen und in Dibutyl- und Monobutylzinnverbindungen überführen. An der Kathode, die als Stahlelektrode ausgeführt ist, werden die Zinn-Kohlenstoff-Verbindungen der Monobutylzinnverbindungen, die oxidativchemisch nicht zugänglich sind, reduktiv aufgebrochen. Der pH-Wert wird durch geeignete Wahl der Stromdichte an den Elektroden auf einen Bereich von pH 6 bis pH 8 eingestellt.

Im Ausführungsbeispielen gemäß Fig. 3 gelangt eine Suspension mit gereinigtem Baggergut aus der Elektrolysezelle über eine Leitung 8 zu einem Feststoffabscheider 9, über den gereinigter Feststoff abgezogen und gegebenenfalls einer anschließenden Wäsche unterzogen werden kann. Das verbleibende Prozeßwasser wird anschließend über eine Leitung 10 zu einem Mischer 1 geführt, wo dem Prozeßwasser neues Baggergut zugesetzt wird. Die so hergestellte Suspension aus Prozeßwasser und Baggergut gelangt nun über eine Leitung 11 in die Elektrolysezelle 7, wo eine Aktivierung bzw.

Reaktivierung des Prozeßwassers stattfindet und gleichzeitig das neue Baggergut behandelt werden kann.

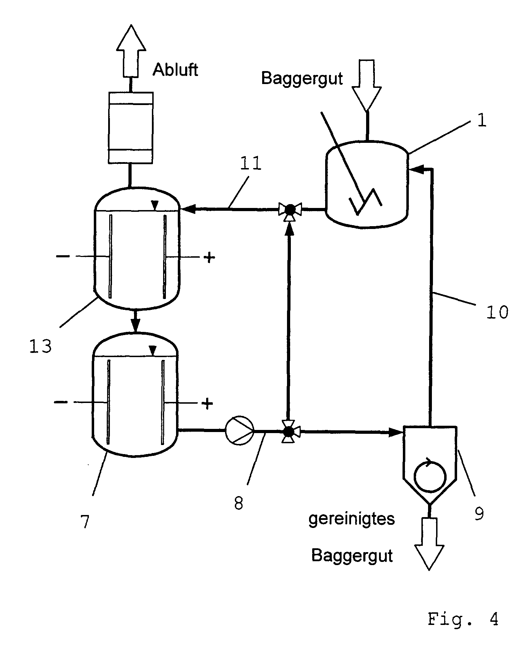

Im Ausführungsbeispiel gemäß Fig. 4 sind statt einer Elektrolysezelle (7) zwei Elektrolysezellen (7, 13) kaskadenartig hintereinandergeschaltet, um eine zusätzliche Effizienzsteigerung zu erreichen.

Versuchsbeispiel

500 ml eines Sedimentes wurden mit derselben Menge einer 1 M NaCl-Lösung vermischt, durch eine ungeteilte Elektrolysezelle (Querschnittsfläche 0,12 dm$^2$, Höhe 4 dm) geleitet und am Zellenboden abgepumpt. Diese Suspension wurde mit einem Volumenstrom von 25 ml pro Minute im Kreislauf gepumpt, d. h. am oberen Einlaß derselben Kathodenkammer der Elektrolyse wieder zugeführt. Die dimensionsstabile Anode wurde mit einer Stromdichte in einem Bereich von etwa 20-40 A/dm$^2$ beaufschlagt, wodurch der pH-Wert im Bereich zwischen pH 6 und pH 8 eingestellt wurde. Der Kreislauf wurde auf diese Weise über 2 Stunden betrieben. Die Konzentration von Tributylzinn nahm um 94 % ab.

Eine Durchführung des Versuchs mit einer vergleichsweise niedrigen Stromdichte von 5 A/dm$^2$ führte zu einer unerwünschten Absenkung des pH-Wertes auf pH 2. Darüber hinaus war eine Zunahme von AOX im Produkt um ca. 5000 mg/kg festzustellen.

Bei höherer Stromdichte von 60 A/dm$^2$ bildeten sich Chlorgasblasen, die in die Abluft entwichen. Als Folge stieg der pH-Wert auf 9 bis 11.

Bezugszeichenliste

1 Mischer
2 Leitung
3 Produkt
4 Rohrsystem
5 Sedimentations- bzw. Klärungszone
6 Leitung
7 Elektrolysezelle
8 Leitung
9 Feststoffabscheider
10 Leitung
11 Leitung
12 Prozeßwasserbehälter
13 Elektrolysezelle

**Patentansprüche**

1. Verfahren zur Behandlung von Baggergut und anderen mit Organometallverbindungen belasteten Produkten, wobei man

    a) das Produkt in einem Prozeßwasser suspendiert,
    b) das Prozeßwasser durch Elektrolyse elektrochemisch aktiviert, und
    c) in einer ungeteilten Elektrolysezelle den pH-Wert über die an den Elektroden angelegte Stromdichte einstellt.

2. Verfahren nach Anspruch 1
**dadurch gekennzeichnet,**
**daß** der pH-Wert auf einen Wert größer pH 5 eingestellt wird.

3. Verfahren nach Anspruch 2
**dadurch gekennzeichnet,**
**daß** der pH-Wert in einem Bereich zwischen pH 6 und pH 8 eingestellt wird.

4. Verfahren nach einem der vorhergehenden Ansprüche
**dadurch gekennzeichnet,**
**daß** man zur Einhaltung des pH-Wertes eine Stromdichte im Bereich zwischen 20 und 40 A/dm$^2$ wählt.

5. Verfahren nach einem der vorhergehenden Ansprüche
**dadurch gekennzeichnet,**
**daß** man als Prozeßwasser Meerwasser verwendet.

6. Verfahren nach einem der vorhergehenden Ansprüche,
**dadurch gekennzeichnet,**
**daß** man dem Prozeßwasser Chlorid zusetzt, vorzugsweise Natriumchlorid.

7. Verfahren nach einem der vorhergehenden Ansprüche,
**dadurch gekennzeichnet,**
**daß** man das Produkt mit dem Prozeßwasser durchströmt.

8. Verfahren nach Anspruch 7,
**dadurch gekennzeichnet,**
**daß** man das Prozeßwasser nach dem Durchströmen des Produkts zurückführt und erneut elektrochemisch aktiviert.

9. Anlage zur Durchführung des Verfahrens nach einem der vorhergehenden Ansprüche,
**dadurch gekennzeichnet,**
**daß** die Anlage über eine ungeteilte Elektrolysezelle (7, 13) verfügt, in der das Prozeßwasser elektrochemisch aktiviert wird, und in der die Behandlung des Produkts (3) stattfindet, und daß die Elektrolysezelle (7, 13) eine Einrichtung zur pH-Messung aufweist.

10. Anlage nach Anspruch 9,
**dadurch gekennzeichnet,**
**daß** der pH-Wert über die Stromdichte regelbar ist.

11. Anlage nach Anspruch 9 oder 10,
**dadurch gekennzeichnet,**
**daß** die Elektrolysezelle (7, 13) über ein Rohrsystem (4) verfügt, das unter dem Produkt (3) angeordnet ist.

12. Anlage nach einem der Ansprüche 9 bis 11,
**dadurch gekennzeichnet,**
**daß** sich die Elektrolysezelle (7, 13) auf einer Schute befindet.

13. Anlage nach einem der Ansprüche 9 bis 12,
**dadurch gekennzeichnet,**
**daß** mindestens zwei Elektrolysezellen (7, 13) kaskadenartig hintereinandergeschaltet sind.

14. Anlage nach einem der Ansprüche 9 bis 14,
**dadurch gekennzeichnet,**
**daß** die Anlage für den Kreislaufbetrieb ausgebildet ist, so daß das Prozeßwasser nach der Behandlung des Produkts (3) in die Elektrolysezelle (7, 13) zurückgeführt werden kann.

Fig. 1: Pourbaix-Diagramm für das System
0,1 mM Sn - 1 M Cl - $H_2O$ - System bei 25 °C und 1000 hPa

Fig. 2

Abluft

Baggergut

NaCl

HClO

Fig. 3

Fig. 4

# EP 1 148 031 A1

**Europäisches Patentamt**

## EUROPÄISCHER RECHERCHENBERICHT

Nummer der Anmeldung

EP 00 10 8374

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 250 161 A (CHIN GEORGE ET AL) 5. Oktober 1993 (1993-10-05) * Spalte 4, Zeile 7 - Zeile 25 * | 9 | C02F1/46 B09C1/00 A62D3/00 |
| A | * Spalte 7, Zeile 8 - Zeile 12; Abbildung 2 * | 1 | |
| X | EP 0 524 493 A (IBM) 27. Januar 1993 (1993-01-27) * Spalte 3, Zeile 9 - Zeile 17 * | 9 | |
| X | PATENT ABSTRACTS OF JAPAN vol. 1998, no. 01, 30. Januar 1998 (1998-01-30) & JP 09 234471 A (JGC CORP), 9. September 1997 (1997-09-09) | 9 | |
| A | * Zusammenfassung * | 2-4,6 | |
| Y | US 6 045 707 A (SCRUDATO RONALD J ET AL) 4. April 2000 (2000-04-04) * Spalte 5, Zeile 42 - Zeile 65 * * Spalte 6, Zeile 19 - Zeile 20 * * Spalte 8, Zeile 60 - Zeile 63; Ansprüche 4,5 * | 1-3 | RECHERCHIERTE SACHGEBIETE (Int.Cl.7) C02F B09C A62D |
| Y | DATABASE WPI Section Ch, Week 8104 Derwent Publications Ltd., London, GB; Class D15, AN 1981-05297D XP002148088 & SU 735 577 A (ZAPORO KOMMUNAR CAR), 25. Mai 1980 (1980-05-25) * Zusammenfassung * | 1-3 | |
| A | US 5 958 229 A (WENZEL THOMAS E ET AL) 28. September 1999 (1999-09-28) * Spalte 1, Zeile 38 * * Spalte 2, Zeile 56 * | 12 | |

-/--

Der vorliegende Recherchenbericht wurde für alle Patentansprüche erstellt

| Recherchenort | Abschlußdatum der Recherche | Prüfer |
|---|---|---|
| DEN HAAG | 21. September 2000 | Gonzalez Arias, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

10

**Europäisches**
**Patentamt**

# EUROPÄISCHER RECHERCHENBERICHT

Nummer der Anmeldung

EP 00 10 8374

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 4 663 002 A (CHIANG JOHN S C ET AL) 5. Mai 1987 (1987-05-05) * Spalte 6, Zeile 54 - Zeile 55; Abbildung 2 * | 13 | |
| A | US 3 799 853 A (CARLIN W) 26. März 1974 (1974-03-26) * das ganze Dokument * | 1,2,4,6, 9 | |
| A | DE 25 10 534 A (ANDCO INC) 18. September 1975 (1975-09-18) * das ganze Dokument * | 1 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 21. September 2000 | Gonzalez Arias, M |

**ANHANG ZUM EUROPÄISCHEN RECHERCHENBERICHT**
**ÜBER DIE EUROPÄISCHE PATENTANMELDUNG NR.**　　　EP 00 10 8374

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2000

| Im Recherchenbericht angeführtes Patentdokument | | Datum der Veröffentlichung | Mitglied(er) der Patentfamilie | | Datum der Veröffentlichung |
|---|---|---|---|---|---|
| US 5250161 | A | 05-10-1993 | DE | 4290097 T | 28-01-1993 |
| | | | EP | 0522140 A | 13-01-1993 |
| | | | GB | 2258245 A,B | 03-02-1993 |
| | | | JP | 7047832 B | 24-05-1995 |
| | | | JP | 5504379 T | 08-07-1993 |
| | | | WO | 9213117 A | 06-08-1992 |
| EP 0524493 | A | 27-01-1993 | US | 5230782 A | 27-07-1993 |
| | | | JP | 2047173 C | 25-04-1996 |
| | | | JP | 5192662 A | 03-08-1993 |
| | | | JP | 7083871 B | 13-09-1995 |
| JP 09234471 | A | 09-09-1997 | KEINE | | |
| US 6045707 | A | 04-04-2000 | AU | 6258799 A | 10-04-2000 |
| | | | WO | 0017113 A | 30-03-2000 |
| SU 735577 | A | 25-05-1980 | KEINE | | |
| US 5958229 | A | 28-09-1999 | US | 5989396 A | 23-11-1999 |
| US 4663002 | A | 05-05-1987 | KEINE | | |
| US 3799853 | A | 26-03-1974 | KEINE | | |
| DE 2510534 | A | 18-09-1975 | US | 3926753 A | 16-12-1975 |
| | | | AU | 7894875 A | 16-09-1976 |
| | | | BE | 826551 A | 30-06-1975 |
| | | | BR | 7501404 A | 30-11-1976 |
| | | | JP | 50120162 A | 20-09-1975 |
| | | | NL | 7502899 A | 15-09-1975 |
| | | | SE | 7502595 A | 12-09-1975 |

EPO FORM P0461

Für nähere Einzelheiten zu diesem Anhang : siehe Amtsblatt des Europäischen Patentamts, Nr.12/82